# EUROPEAN PATENT SPECIFICATION

(11) **EP 1 873 186 B1**
(45) Date of publication and mention of the grant of the patent: **26.12.2012**
(21) Application number: 07011534.0
(22) Date of filing: 13.06.2007
(51) Int. Cl.: C08G 65/12, C08G 65/26

(54) **Pendant acrylate and/or methacrylate-containing polyether monols and polyols**
Hängende acrylat- und/oder methacrylathaltige Polyethermonole und -polyole
Monols et polyols de polyether ayant des groupes acrylates et/ou methacrylates pendants

(30) Priority: 21.06.2006 US 472000
(43) Date of publication of application: 02.01.2008
(73) Proprietor: Bayer MaterialScience AG, 51368 Leverkusen (DE); Bayer MaterialScience LLC, Pittsburgh, PA 15205 (US)
(72) Inventor: Fäcke, Thomas, Bridgeville, PA 15017 (US); Haider, Karl W., Wexford, PA 15090 (US); Weikard, Jan, 51519 Oldenthal (DE)
(74) Representative: Feldhues, Michael L.F.

(56) References cited:
- WO-A-99/46310
- GB-A- 975 461
- GB-A- 1 218 431
- US-A- 4 130 518
- US-A- 5 854 386
- LI, C. ET AL: "Synthesis and characterization of radiation curable polyurethanes containing pendant acrylate groups" POLYMER ENGINEERING AND SCIENCE, vol. 26, no. 20, November 1986 (1986-11), pages 1442-1450, XP002451838 ISSN: 0032-3888

## Description

### FIELD OF THE INVENTION

The present invention relates to the preparation and use of pendant acrylate and/or methacrylate-containing polyether monols or polyols, particularly in coating compositions which can be cured by thermal or actinic radiation.

### BACKGROUND INFORMATION

The curing of coating systems which carry activated double bonds by actinic radiation, such as UV light, IR radiation or else electron beams, is known and is established in industry. It is one of the most rapid curing methods in coating technology. UV curable coatings have increased in popularity because their use greatly speeds production and cure times, thus providing improvements in productivity. For example, in automotive refinish applications where minor repairs need to be performed swiftly and at ambient temperature, UV technology can increase the throughput of cars in a body shop.

Acrylate-containing polyether and polyesters are well known in the art and are frequently used for radiation cured systems. For example, Sartomer manufactures and sells acrylate terminated polyethylene glycol products under the name SR259 and SR344 that can be used in radiation cured polymers. However, these polymers contain only terminal acrylate groups and do not contain hydroxyl functionality.

Materials containing both terminal acrylate and terminal hydroxyl groups are also known and offered commercially. For example, pentaerythritol triacrylate containing on average one hydroxyl group and three acrylate groups/mole is offered commercially by Sartomer under the product name SR444. Although on average this material does contain the specified number of acrylate and hydroxyl groups, it is prepared by a trans-esterification process from pentaerythritol and acrylic acid or derivatives thereof, which gives a statistical distribution of products, e.g. some monol, diol, triol and tetrol, and some mono, di, tri-, and tetraacrylates. In addition, the number of terminal acrylate functional groups is limited by the number of terminal hydroxyl groups that were present in the starting polyol, and one cannot de-couple the number of acrylate groups and hydroxyl groups. For example, if one starts with a four functional polyol, one can have a maximum of four acrylate groups/mole, and the sum of the average number of acrylate and hydroxyl functional groups/mole must total four.

In order to overcome some of the aforementioned problems with acrylate containing polyethers, Shen (U.S. Patent 5,854,386) describes alkoxylated (meth)acrylate macromonomers for use in UV-cured adhesives and polyurethane dispersions. These products are made using a double metal cyanide (DMC) catalyzed alkoxylation process, using acrylate-containing alcohols as the starters, and the resulting polyethers contain one terminal acrylate group and one terminal hydroxyl group. In a separate patent (U.S. Patent 6,664,360) Shen describes a continuous addition of starter (CAOS) process for the preparation of these alkoxylated acrylate and methacrylate macromonomers. Regardless of the process used to prepare them, the macromonomers of Shen are acrylate-terminated monols, and do not have more than one acrylate group per molecule.

U.S. Patent 3,829,505 describes the preparation of hydroxy-terminated polyethers using a double metal cyanide complex catalyst. The use of the allyl ether and vinyl group-containing oxiranes (allyl glycidyl ether and 1,2-epoxy butene, respectively) as suitable organic cyclic oxides for polymerization are disclosed. There is no disclosure of polymerization or copolymerization of acrylate or methacrylate containing oxiranes, to produce pendant acrylate or methacrylate containing polyether polyols. The acrylates and methacrylates are recognized by those skilled in the art as more readily polymerized in free radical processes. Therefore one might expect them to be more likely to undergo undesirable polymerization during the DMC catalyzed synthesis of polyether polyols from oxiranes containing pendant acrylate or methacrylate groups.

G. Ahmedova et al., Eurasian Chem. Tech. J. 2(2000), 157-160, describe the cationic polymerization of propylene oxide (PO) with glycidylmethacrylate (GMA) using a BF₃·O(C₂H₅)₂ catalyst. The resulting pendant methacrylate containing polymers have number average molecular weight (Mn) of 370-600, weight average molecular weight (Mw) of 540-1050, and polydispersity (Mw/Mn) of 1.5-1.8. The use of any starter compounds is not disclosed, nor is there any guidance on how to control the molecular weight and/or functionality of the methacrylate-containing polymers, for which no end group types or functionalities are provided. Furthermore, the polymers of Ahmedova were produced at yields of 75-84%, which corresponds to 16-25% residual monomers (PO and GMA). Because of their toxicity, these monomers would need to be subsequently removed from the polymers prior to their use in radiation cured coatings due to chemical hygiene concerns.

For synthesis of high molecular weight UV-curable polyurethane resins dihydroxy- or polyhydroxy-functional chemical building blocks containing UV-curable acrylate or methacrylate groups would be desirable. It would be especially desirable to produce these resins in a process where one can independently vary and control both the hydroxyl equivalent weight and the number of acrylate or methacrylate and hydroxyl groups per mole, and produce the polymers with low polydispersity (<1.4) at high yield with low levels of residual monomers (<2% monomer). Materials with these characteristics are not described in the prior art. Thus, there is a continued need for low polydispersity, low residual monomer containing macromonomer compositions containing terminal hydroxyl and pendant acrylate or methacrylate groups that can be used in UV-curable and dual cure coating compositions such as polyurethane dispersions.

### SUMMARY OF THE INVENTION

In one aspect, the present invention provides methods of making a hydroxyl or polyhydroxy functional pendant acrylate- and/or methacrylate-containing polyether, the method comprising:
i) providing a monomer mixture comprising at least one alkylene oxide, at least one oxirane compound containing a (meth)acrylate group, and at least one starter compound having at least one Zerewitinoff- active hydrogen with an equivalent weight of 31 to 8,000 g/eq. of active hydrogen.; and
ii) polymerizing the mixture in the presence of a double metal cyanide complex catalyst, and optionally in the presence of an aprotic solvent and/or an antioxidant, wherein the ploydispersity index of the resulting monol or polyol is between 1.0 and 1.4.

In an additional aspect, the pendant acrylate- and/or methacrylate-containing polyether monols and polyols made by the above methods are provided. Polyether monols and polyols of the present invention preferably have between 1 and 20 pendant acrylate and/or methacrylate groups and a hydroxyl equivalent weight of 200-9,000 g/eq. The polyether polymer chains have both one or more pendant (meth)acrylate groups and one or more terminal hydroxyl groups. The average number of (meth)acrylate groups and terminal hydroxyl groups per chain can be controlled by the choice of starter (hydroxyl functionality) and the number of moles of olefin containing oxirane fed per mole of starter. Additionally, the polyether monols and polyols of the present invention do not have a terminal (meth)acrylate group.

The pendant acrylate- and/or methacrylate-containing polyether monols and polyols of the present invention offer increased cure speed and variability in the number of terminal hydroxyl and pendant (meth)acrylate groups of the polymer, such that it can be specifically tailored to meet the needs of the desired end use. Thus, high or low crosslink density after UV cure can be tuned to achieve high chemical, scratch and mar resistance or high flexibility.

These and other aspects of the present invention will be more readily apparent from the following detailed description and appended claims.

### BRIEF DESCRIPTION OF THE DRAWINGS

The invention is further illustrated by the following non-limiting drawing in which:

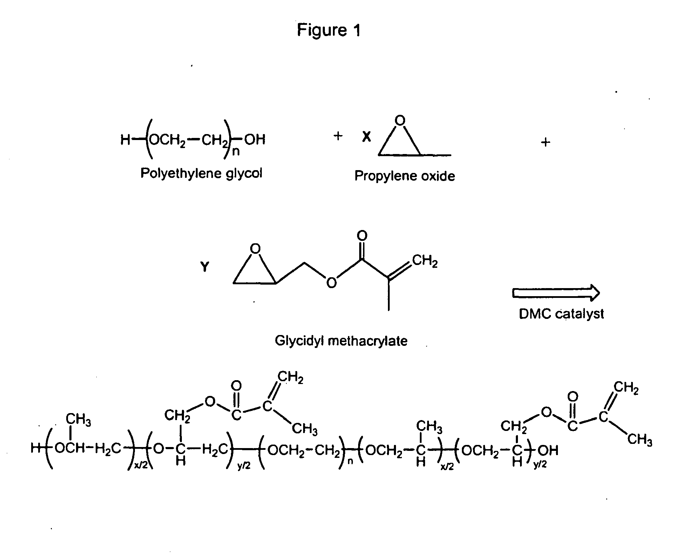

Figure 1 is a schematic diagram of the process and product of the invention in an exemplary embodiment.

### DETAILED DESCRIPTION OF THE INVENTION

As used herein in the specification and claims, including as used in the examples and unless otherwise expressly specified, all numbers may be read as if prefaced by the word "about", even if the term does not expressly appear. Also, any numerical range recited herein is intended to include all sub-ranges subsumed therein.

As used herein, the term "polyether polyol" refers to a molecule containing a polyoxyalkylene (commonly called polyether) chain and one or more terminal hydroxyl groups. The term "pendant", as used herein, refers to a side group or side chain attached to the polyether backbone. As used herein, the term (meth)acrylate refers to both methacrylate and acrylate groups. In an exemplary embodiment depicted in Figure 1, shown for the purpose of illustration and not meant to be limiting, the reaction of polyethylene glycol, propylene oxide and glycidyl methacrylate to produce a pendant methacrylate-containing polyether polyol is shown. As will be understood by one skilled in the art, the value for n will depend on the molecular weight of the polyethylene glycol starter, and the values of x and y will depend on the amounts of each monomer used in the polymerization process, i.e. the number of moles of propylene oxide and glycidyl methacrylate, respectively, per mole of the polyethylene glycol starter. As will also be understood by one skilled in the art, the order of the monomer repeat units in the polymer can be other than that shown, for example, the polymer could have several pendant (meth)acrylate-containing repeat units in a row, followed by the alkylene oxide repeat units, in any order and in any number.

In the method of the present invention, the monomer mixture comprises a starter compound, also known as an "initiator". Suitable starter compounds are those known in the art in the preparation of polyether polyols, and have at least one Zerewitinoff active hydrogen, usually between 1 and 8 active hydrogens. The term "Zerewitinoff active hydrogen" is well known and commonly used in the art, and as used herein it generally corresponds to active hydrogen as determined by the method described by Zerewitinoff in J. Am. Chem. Soc., Vol. 49, 3181 (1927).

Some examples of starters include water; aliphatic alcohols; aromatic alcohols; phenols; thiols, acrylate-containing alcohols; aldehydes and ketones containing enolizable hydrogens; malonic esters; carboxylic acids; glycol monoalkyl ethers; and polyether polyols (e.g., compounds derived from an alkylene oxide reacted with a lower polyalkanol and having a hydroxyol equivalent weight of between 200 and 8,000 g/eq.), and polyester and polycarbonate polyols having hydroxyol equivalent weight of 200-8,000 g/eq. Furthermore, active hydrogen-containing compounds having one or more UV-curable group can be also used. Especially useful are partially (meth)acrylated di-or polyols, (including polyether polyols or polyester polyols) and (meth)acrylated mono-, di- or polyglycidyl compounds. As used herein, the term "thiol" refers to mono- , di-, and polythiol compounds. Also as used herein, the term "alcohol" refers to mono-, di-, and higher functional alcohols.

Some examples of specific compounds falling within the above categories include butanol, ethylene glycol, diethylene glycol, triethylene glycol, 1,2-propylene glycol, ethanediol, 1,2-propanediol, 1,3-propanediol,1,4-butanediol, 1,2-butanediol, 2,3-butanediol, 1,6-hexanediol, bisphenol A, propylene glycol, dipropylene glycol, tripropylene glycol, trimethylolpropane, glycerin, pentaerythritol, sorbitol, sucrose, starch, hydroxyethyl (meth)acrylate, hydroxypropyl (meth)acrylate, 3-acryloyloxy-2-hydroxypropyl-methacrylate, partially acrylated glycerol, partially acrylated trimethylolpropane or partially acrylated pentaerythritol and the reaction product of bisphenol-A-diglycidyl ethers with acrylic acid, and thiols such as ethane dithiol, propane dithiol, pentanedithiol, and hexane dithiol. Oxalkylation products of any of these can also be used. Combinations of two or more starters can also be used, depending on the desired end product.

Typically, the starter compound will have at least one active hydrogen. Preferably, the starter compound will have between 1 and 8 active hydrogens, more preferably 1-6 and most preferably 2-4 active hydrogens. The starter compound will have an active hydrogen with an equivalent weight of 31 to 8,000 g/eq. of active hydrogen, more preferably 100-4,000 g/eq. of active hydrogen, most preferably 200 -2,000 g/eq. of active hydrogen. The starter compound is present in the monomer mixture in a range of 0.2 - 97 wt.%, more preferably 2 - 50 wt.%, most preferably 5 -30 wt.%, all weight percentages based on the weight of the monomer mixture and excluding catalyst. Preferred starter compounds include polyether and polyester polyols.

The monomer mixture also comprises an alkylene oxide. As used herein, to avoid confusion, the term "alkylene oxide" refers to epoxide-containing compounds that do not contain a (meth)acrylate group. Some examples of suitable alkylene oxides include ethylene oxide, propylene oxide, 1,2-butylene oxide, 2,3-butylene oxide, and styrene oxide. Mixtures of two or more alkylene oxides can also be used. Preferred alkylene oxides are ethylene oxide, propylene oxide, 1,2-butylene oxide and 2,3-butylene oxide, or mixtures of these. The alkylene oxide will be present in the monomer mixture in a range of 1 - 98 wt.%, preferably 20 - 80 wt.%, most preferably 30 - 60 wt.%, based on the weight of the monomer mixture as a whole, and excluding catalyst.

The monomer mixture further comprises an oxirane compound containing a (meth)acrylate group. An oxirane compound is a compound having a three-membered ring containing an oxygen atom and two carbon atoms in the ring. The oxirane compounds useful in the present invention also contain a (meth)acrylate group, and are 4-15 carbons in size. Some examples of suitable oxirane compounds containing a (meth)acrylate group are glycidyl acrylate and glycidyl methacrylate. Preferred is glycidyl methacrylate. The oxirane containing a (meth)acrylate group will be present in the monomer mixture in a range of 2 - 85 wt.%, preferably 10 - 60 wt.%, most preferably 20 - 50 wt.%, based on the weight of the monomer mixture as a whole, and excluding catalyst.

Polymerization is carried out in the presence of a double metal cyanide (DMC) catalyst. Use of DMC catalysts in the preparation of polyether polyols is well known in the art. Suitable examples of methods for the preparation of DMC catalysts and the use thereof in the manufacture of polyether polyols can be found in U.S. Pat. Nos. 3,278,457; 3,404,109; 3,941,849; 5,158,922; 5,482,908; 5,783,513; 6,613,714 and 6,855,658 the entire contents of which are incorporated herein by reference thereto.

As those skilled in the art are aware, DMC catalysts are made by the reaction of hexacyanometallate salts with transition metal salts in the presence of suitable complexing organic ligands and optionally with functionalized polymers or other processing aids to produce a compound with the formula given below:

M¹ₓ[M²(CN)₆]_{y}^{.}zM¹(X)_{q}•L

wherein,
M¹ represents a metal selected from the group consisting of Zn⁺² , Fe⁺² , Ni⁺² Mn⁺², Co⁺², Sn⁺², Pb⁺², Fe⁺³, Mo⁺⁴, Mo⁺⁶, Al⁺³, V⁺⁴, V⁺⁵, Sr⁺², W⁺⁴, W⁺⁶, Cu⁺² and Cr⁺³;
M² represents a metal selected from the group consisting of Fe⁺², Fe⁺³, Co⁺², Co⁺³, Cr⁺², Cr⁺³, Mn⁺², Mn⁺³, Ir⁺³, Ni⁺², Rh⁺³, Ru⁺², V⁺⁴ and V⁺⁵;
X represents an anion selected from the group consisting of halide, hydroxide, sulfate, carbonate, cyanide, thiocyanide, carboxylate, or nitrate;
L represents an organic ligand; and
x, y, and q are chosen to maintain electroneutrality.

Preferred for use in the present invention are those zinc hexacyanocobaltate catalysts prepared by the methods described in U.S. Pat. No. 5,482,908, the entire contents of which are incorporated herein by reference thereto. The DMC catalyst may also be bound to a support as described in U.S. Pat. No. 6,362,126, also incorporated herein by reference. A particularly preferred catalyst is a zinc hexacyanocobaltate complex with a polyalkylene glycol. The DMC catalysts used in the present invention cause the addition reaction to occur predominantly in a fashion where the oxygen group of the growing polymer chain becomes covalently attached to the methylene group of the alkylene oxide or (meth)acrylate containing oxide. This results in a different product than that produced in cationic polymerizations, such as those catalyzed by BF3, where the growing polymer chain attacks the oxirane at the more highly substituted carbon, i.e. the one bound to a methyl group or methacrylate group in the cases of propylene oxide or glycidyl methacrylate, respectively.

The catalyst concentration is 10 - 5,000 ppm, preferably 25 - 2,500 ppm, most preferably 50 - 500 ppm, in each case based on the weight of the product. The reaction times for the polymerization are in the range from a few minutes to several days, preferably a few hours.

Polymerization of the monomer mixture may be carried out in a semi-batch mode or continuously, using the continuous addition of starter (CAOS) method.

In the semi-batch process, the DMC catalyst and starter (and optionally a solvent and/or heel of the product or similar product to what one is preparing) are charged to the reactor and heated under vacuum to de-water. A portion of the alkylene oxide or a mixture of the alkylene oxide and the (meth)acrylate-containing oxirane are fed into the reactor, while monitoring the reactor pressure. Once the catalyst has become active, evident by a drop in reactor pressure, the remaining alkylene oxide and (meth)acrylate-containing oxirane are continuously added in metered amounts until the desired molecular weight of the pendant (meth)acrylate-containing polyether polyol is attained.

The CAOS method differs from the semi-batch method only in that not all of the starter is charged into the reactor initially. Thus, in addition to the alkylene oxide and (meth)acrylate-containing oxirane, a portion or all of the starter is continuously fed into the reactor, during the alkoxylation. The feed rates are typically adjusted so that the starter feed is completed prior to feeding all of the alkylene oxide and (meth)acrylate-containing oxirane. If desired, additional DMC catalyst can also be metered in during the alkoxylation. CAOS methods are described in detail in U.S. Patent 5,777,177, and are well known in the art.

With both the semi-batch and CAOS methods, a "heel" process may be employed. In a heel process, the initial charge to the reactor contains, in addition to the catalyst and any starter compound, either the product or a material similar to the product one is preparing. The "heel" has the advantage of serving as a carrier for the catalyst and any starter that is initially charged. It is particularly useful for high melting, solid or very viscous starters, and has the advantage over a solvent that it does not need to be removed from the product.

Polymerization of the monomer mixture, catalyzed by the highly active DMC catalysts, generally proceeds at temperatures of 20 to 200° C., preferably in the range from 60 to 150° C., particularly preferably at temperatures of 90 to 120° C. The reaction may be performed at total pressures of 0.001 to 20 bar. Polymerization may be performed without solvent or in an inert (aprotic) organic solvent, such as, for example, toluene, xylene, tetrahydrofuran, 1,2-dimethoxyethane, methyl tetrahydrofuran, dioxane, benzene, hexane or other suitable solvent, as would be known to one skilled in the art. If used, the quantity of solvent is conventionally 5 to 80 wt. % relative to the quantity of the polyether to be produced. The reaction is preferably performed without solvent. The yield of polyether monol or polyol produced in the present invention is greater than 95%, preferably greater than 97%, more preferably >99%. The yield is determined by subtracting the weight % of residual monomers detected in the product from 100 %.

Optionally, polymerization may be conducted in the presence of an antioxidant to protect the olefinic group. Suitable antioxidants are known to those skilled in the art of UV chemistry and include, for example, phenothiazine, butylated hydroxy toluene (BHT), 1,4-benzoquinone, 1,4-napthoquinone, diphenylphenylhydrazine, ferric chloride, copper chloride, sulfur, aniline, t-butyl-catechol, trinitrobenzene, nitrobenzene, 2,3,5,6-tetrachloro-1,4-benzoquinone (chloranil), tris (N-nitroso-N-phenylhydroxylamine) aluminum salt (available from Albemarle as Firstcure NPAL) and the like. Phenothiazine and Firstcure NPAL are preferred.

The antioxidant should be used in an amount effective to inhibit polymerization of olefin group of the pendant (meth)acrylate-containing polyether monol or polyol. This will vary with the reactivity of the concentration of the (meth)acrylate group, and temperature. Amounts of antioxidant, in weight percent relative to the weight of the oxirane compound, may vary from about 0.001 weight percent to about 1 weight percent, and more preferably from about 0.01 weight percent to about 0.5 weight percent. If the antioxidant is not used, particularly with less active DMC catalysts, the product may be highly colored, or gelling of the product may occur.

The pendant (meth)acrylate-containing polyether monols and polyols of the present invention have between 1 and 20 pendant olefinic groups, more preferably between 2 and 8 pendant (meth)acrylate groups, or any number in between. As will be understood by one skilled in the art, the number of pendant (meth)acrylate groups can be specifically tailored to provide the desired properties in the final product, including viscosity, cure rate, and olefinic density, which will influence scratch, mar, chemical resistance, flexibility and the like in the finished product In general, the product will have between 0.1 - 5 equivalents of olefin per kilogram of product, more preferably between 2 - 4 equivalents olefin/kg product. The pendant (meth)acrylate-containing polyether monols and polyols of the present invention are characterized as having a polydispersity index of 1.0 - 1.4, more preferably 1.0 - 1.3, most preferably 1.0 - 1.25.

The pendant (meth)acrylate-containing polyether monols and polyols of the present invention can be further characterized as having a hydroxyl equivalent weight of 200-9,000 g/eq., more preferably 400-3,000 g/eq.

The pendant (meth)acrylate-containing polyether monols and polyols of the present invention can be used in coating compositions which can be cured by a variety of methods, including thermal curing or curing by exposure to actinic radiation such as ultraviolet, infrared, gamma radiation and electron beam. These curing methods and the equipment used for them are well known to those skilled in the art. Suitable sources of radiation include, for example, mercury, xenon, halogen, carbon arc lamps, sunlight, and radioactive sources. When the composition is to be cured by non-ionizing radiation, the presence of a photoinitiator is desirable.

As initiators for a free-radical polymerization it is possible to employ radiation-activatable and/or heat-activatable initiators. Photoinitiators which are activated by UV or visible light are preferred in this context, and many known photoinitiators are commercially available. Unimolecular initiators are referred to as type I initiators; bimolecular initiators are referred to as type II initiators. Suitable (type I) systems include aromatic ketone compounds, e.g. benzophenones in combination with tertiary amines, alkylbenzophenones, 4,4'-bis(dimethylamino)-benzophenone (Michler's Ketone), anthrone and halogenated benzophenones or mixtures of the said types. Also suitable are (type II) initiators such as benzoin and its derivatives, benzil ketals, acylphosphine oxides such as 2,4,6-trimethylbenzoyl-diphenylphosphine oxide, bisacylphosphine oxides, phenylglyoxylic esters, camphorquinone, α-aminoalkylphenones, α,α-dialkoxyacetophenones and α-hydroxyalkylphenones. It is also possible to use mixtures of these compounds, and they be combined with sensitizers as known by anyone skilled in the art of UV coatings. The photoinitiator will be used in amounts ranging from 0.1-12 wt.%, preferably 1-5 wt.%, based on the weight of the polymerisable compounds.

Where curing is initiated thermally, peroxy compounds are suitable, and are used in amounts ranging from 0.1-12 wt.%, preferably 1-5 wt.%, based on the weight of polymerisable compounds. Some examples of peroxy compounds include diacyl peroxides, e.g. benzoyl peroxide, alkyl hydroperoxide such as diisopropylbenzene monohydroperoxide, alkyl peresters such as tert-butyl perbenzoate, dialkyl peroxides such as di-tert-butyl peroxide, peroxydicarbonates such as dicetyl peroxide dicarbonate, inorganic peroxides such as ammonium peroxodisulfate, potassium peroxodisulfate or else azo compounds such as 2,2'-azobis[N-(2-propenyl)-2-methylpropionamides], 1-[(cyano-1-methylethyl)azo]formamides, 2,2'-azobis(N-butyl-2-methylpropionamides), 2,2'-azobis(N-cyclohexyl-2-methylpropionamides), 2,2'-azobis{2-methyl-N-[2-(1-hydroxybutyl)]propionamides}, 2,2'-azobis{2-methyl-N-[2-(1-hydroxybutyl)]propionamides, 2,2'-azobis{2-methyl-N-[1,1- bis(hydroxymethyl)-2-hydroxyethyl]propionamides, and also benzpinacol. Preferred compounds are those which are soluble in water or in the form of aqueous emulsions. These free-radical initiators may be combined familiarly with accelerators such as amines and certain metal ions, known to those skilled in the art.

The coating compositions of the present invention may be further mixed with reactive diluents as additives that also (co)polymerize in the cure process. Such reactive diluents are described in P.K.T. Oldring (ed.), Chemistry & Technology of UV & EB Formulations for Coatings, Inks & Paints, Vol. 2, 1981, SITA Technology, London pp. 237-285. Examples include the esters of acrylic acid or methacrylic acid, preferably acrylic acid, and alcohols like monohydric alcohols including the isomeric butanols, pentanols, hexanols, heptanols, octanols, nonanols and decanols, as well as cycloaliphatic alcohols such as isobornol, cyclohexanol and alkylated cyclohexanols, dicyclopentanol, arylaliphatic alcohols such as phenoxyethanol and nonylphenyl-ethanol, as well as tetrahydrofuryl alcohols. Alkoxylated derivatives of these alcohols are also suitable. Suitable dihydric alcohols include ethylene glycol, propanediol-1,2, propanediol-1,3, diethylene glycol, dipropylene glycol, the isomeric butanediols, neopentyl glycol, hexanediol-1,6, 2-ethylhexanediol and tripropylene glycol or also alkoxylated derivatives of these alcohols. Preferred dihydric alcohols are hexanediol-1,6, dipropylene glycol and tripropylene glycol. Trihydric alcohols include glycerol or trimethylolpropane or their alkoxylated derivatives.

Since the pendant (meth)acrylate-containing polyether monols and polyols according to the invention have a comparatively low viscosity, often less reactive diluent is required compared to acrylated oligomers of the prior art in order to achieve the same viscosity. In some cases non-reactive diluents such as acetate, butyl acetate, methanol, or other non-reactive diluent or solvent used in coating technology will be desirable, as would be known to one skilled in the art of coatings.

The compositions of the present invention can be further combined with one or more additional resins typically used in UV chemistry, such as epoxyacrylate resins, urethane acrylates, and other polyester, polyacrylate, polyether, polyamide, and polycarbonate resins that contain unsaturated groups such as acrylic, methacrylic, cinnamic, maleimide, dicyclopentadienyl, acrylamide, fumaryl, maleyl, allyl, propenyl, vinyl, and/or vinylether groups.

The coating compositions produced according to the invention may be further mixed with a very wide range of auxiliary substances and additives. These include fillers, pigments, dyes, smoothing agents, matting agents, degassing agents such as polyacrylates, coupling agents such as aminoalkyltrialkoxysilanes and flow control agents such as polysiloxanes, which are used in the amounts normally employed in coating technology. In order to improve the resistance to weathering influences such as for example sunlight, light stabilizers such as UV absorbers and sterically hindered amines may be added in the usual amounts. When using UV absorbers, a proportion of the photoinitiator must generally be a type that absorbs at longer wavelengths. The use of light stabilizers and the various types are described for example in A. Valet, Lichtschutzmittel fur Lacke, Vincentz Verlag, Hanover, 1996. It is also possible to use solvents that are inert within the context of free-radical polymerization, which are then removed between the coating and hardening, if necessary by application of heat. The compositions may also be photopolymerized by exposure to electron beam radiation. Generally speaking, the dosage necessary is from less than 1 megarad to 100 megarads or more.

In additional embodiments, the pendant (meth)acrylate-containing polyether monols and polyols of the present invention can be used as building blocks with isocyanate-containing compounds to prepare urethane acrylates, isocyanate- or hydroxy terminated prepolymers used for example in so-called "dual cure" coatings or adhesives and polyurethane dispersions. The pendant (meth)acrylate-containing polyether monols and polyols of the present invention can be used in the same way as standard polyether monols and polyols in urethane chemistry provided care is taken that the (meth)acrylate groups do not react or polymerize. This can be achieved through known methods, i.e. limitations of temperature and addition of stabilizers. Suitable stabilizers are the same as those described above as suitable for the synthesis of the pendant (meth)acrylate-containing polyether monols and polyols of the present invention. Additionally, oxygen-containing gas can be used as stabilizer.

Suitable isocyanates include substantially any organic di- and/or polyisocyanate. Aromatic, araliphatic, aliphatic or cycloaliphatic di- and/or polyisocyanates and mixtures of such isocyanates may be used. Preferred are diisocyanates of the formula R(NCO)₂, wherein R represents an aliphatic hydrocarbon residue having 4 to 12 carbon atoms, a cycloaliphatic hydrocarbon residue having 6 to 15 carbon atoms, an aromatic hydrocarbon residue having 6 to 15 carbon atoms or an araliphatic hydrocarbon residue having 7 to 15 carbon atoms. Specific examples of suitable isocyanates include xylylene diisocyanate, tetramethylene diisocyanate, 1,4-diisocyantobutane, 1,12-diisocyanatododecane, hexamethylene diisocyanate, 2,3,3-trimethylhexamethylene diisocyanate, 1,4-cyclohexylene diisocyanate, 4,4'-dicyclohexylmethane diisocyanate, 4,4'-dicyclohexyl diisocyanate, 1-diisocyanato-3,3,5-trimethyl-5-isocyanatomethylcyclohexan- e (isophorone diisocyanate), 1,4-phenylene diisocyanate, 2,6-tolylene diisocyanate, 2,4-tolylene diisocyanate, 1,5-naphthylene diisocyanate, 2,4'- or 4,4'-diphenylmethane diisocyanate, 4,4'-diphenyldimethylmethane diisocyanate, α, α, α', α'-tetramethyl-m- or -p-xylylene diisocyanate, and triphenylmethane 4,4',4"-triisocyanate as well as mixtures thereof. Hexamethylene diisocyanate, 4,4'-dicyclohexylmethane diisocyanate and isophorone diisocyanate and the mixtures thereof are the presently preferred isocyanates. Also suitable are monomeric triisocyanates such as 4-isocyanatomethyl-1,8-octamethylene diisocyanate.

Polyisocyanate adducts containing isocyanurate, iminooxadiazine dione, urethane, biuret, allophanate, uretidione and/or carbodiimide groups are also useful as the isocyanate component. Such polyisocyanates may have isocyanate functionalities of 3 or more. Such isocyanates are prepared by the trimerization or oligomerization of diisocyanates or by the reaction of diisocyanates with polyfunctional compounds containing hydroxyl or amine groups. Preferred is the isocyanurate of hexamethylene diisocyanate, which may be prepared in accordance with U.S. Pat. No. 4,324,879.

The coating compositions containing the pendant (meth)acrylate-containing polyether polyols according to the invention are suitable for the production of high-grade coatings, coverings and lacquers on various substrates such as for example paper, cardboard, leather, textiles, glass, plastics materials, metal, e.g. aluminium or steel sheeting, which may optionally have been subjected to a preliminary treatment, as well as metal in the form of so-called "coils", wood, in particular parquet or timber-derived materials such as for example medium density fiberboard, plastics materials such as for example polycarbonate or polyvinyl chloride sheeting (PVC), mineral materials such as, for example, cement, clay, minerals, ceramics or such substrates fabricated from the aforementioned materials that have already been coated, for example, automobiles or automobile parts. Substrates consisting of several of the aforementioned materials may also be coated.

The coating composition is applied to the material to be coated by conventional methods known in lacquer technology such as extrusion, knife application, rolling, pouring, dipping, centrifugal casting and vacuum spraying. Also possible are printing methods and other transfer methods known in the printing industry. The liquid coating compound is hardened by irradiation with ultraviolet radiation or electron beams. To this end the coated material is moved for example under a mercury medium-pressure radiator. Hardening by means of UV radiation is carried out in a known manner and is described for example in P.K.T. Oldring (ed.), Chemistry & Technology of UV & EB Formulations for Coatings, Inks. & Paints, Vol. 1, 1991, SITA Technology, London pp.167-269.

### EXAMPLES

The following examples are intended to illustrate the invention and should not be construed as limiting the invention in any way.

The following materials are used in the Examples:
- **PPG-425:**: A dihydroxy functional polyether polyol having a molecular weight of 425 g/mole based on propoxylated propylene glycol
- **EO:**: ethylene oxide
- **PO:**: propylene oxide
- **GMA:**: glycidyl methacrylate
- **DMC Catalyst:**: zinc hexacyanocobaltate complex with polyalkylene glycol prepared using the procedure described in US #5,482,908, example 3.
- **Albemarle Firstcure NPAL:**: tris (N-nitroso-N-phenylhydroxylamine) aluminum salt used as an antioxidant

### Example 1. Preparation of 2500 MW EO/GMA copolymer with 8 moles GMA

PPG-425 (106 g) and toluene (125 g) were charged into a 1-liter reactor along with phenothiazine (0.06g) and the DMC catalyst (0.075g). The reaction mixture was heated under vacuum with stirring and a nitrogen purge to ~70 °C, at which point toluene began to distill of and be collected in the chilled vacuum trap. After removing ~10 grams of toluene in this manner, the vacuum valve was blocked and the reaction mixture heated to 120 °C. EO (18 g) and glycidyl methacrylate (23 g) were fed into the reactor. After activation, which was evidenced by a rapid drop in reactor pressure, the reaction mixture was cooled to 110 °C and EO (213 g) and GMA (261 g) were fed into the reactor at 1.8 and 2.2 g/min., respectively. At the completion of the feed, the temperature was lowered to 100 °C, and the reaction mixture was stirred at this temperature for 30 minutes, prior to a 30 minute vacuum strip. The contents of the reactor, a pale yellow, low viscosity liquid (601 g; 97% yield), was collected for analysis.

### Example 2. Preparation of 2000 MW PO/GMA copolymer with 4 moles GMA

PPG-425 (170 g) was charged into a 1-liter reactor along with Firstcure NPAL (0.08g; 100 ppm) and the DMC catalyst (0.08 g; 100 ppm). The reaction mixture was heated under vacuum (0.5 psia) with stirring and a nitrogen purge to 120 °C. A mixture of PO:GMA (64:36 pbw) was prepared in a pope vessel to facilitate the co-feed of PO and GMA. After 30 minutes stripping, the vacuum valve to the reactor was blocked and 28 grams of the PO:GMA mixture were fed into the reactor at 10 g/min. After activation, which was evidenced by a rapid drop in reactor pressure, the reaction mixture was cooled to 110 °C and an additional 602 grams of the PO:GMA mixture were fed at a rate of 4 g/min. The total feed consisted of PO (402 g) and GMA (228 g). At the completion of the feed, the temperature was lowered to 100 °C, and the reaction mixture was stirred at this temperature for 30 minutes, prior to a 30 minute vacuum strip. The contents of the reactor, a nearly colorless, low viscosity liquid (760 g; 95% yield) were collected for analysis.

### Example 3. Preparation of 2000 MW EO/GMA copolymer with 4 moles GMA

PPG-425 (170 g) was charged into a 1-liter reactor along with Firstcure NPAL (0.08g; 100 ppm) and the DMC catalyst (0.08 g; 100 ppm). The reaction mixture was heated under vacuum (0.5 psia) with stirring and a nitrogen purge to 120 °C. After 30 minutes stripping, the vacuum valve was blocked and 20 psia of nitrogen was added to the reactor. EO (18 g) was fed into the reactor at 5 g/min. After activation, which was evidenced by a rapid drop in reactor pressure, the reaction mixture was cooled to 110 °C and a EO (384 g) and GMA (228 g) were co-fed into the reactor at feed rates of 2.5 and 1.5 g/min., respectively. At the completion of the feed, the temperature was lowered to 100 °C, and the reaction mixture was stirred at this temperature for 30 minutes, prior to a 30 minute vacuum strip. The contents of the reactor, a nearly colorless, low viscosity liquid (761 g; 95 % yield) were collected for analysis.

Table 1 shows a description of and analytical data for the samples prepared in the above described pendant (meth)acrylate-containing polyether examples. The samples are clear, nearly colorless, low viscosity liquids. The olefin group survived the conditions of the polymerization and was incorporated into the polyether, as indicated by GC and IR analysis of the pendant (meth)acrylate-containing polyether samples.

**Table 1: Description and analytical properties of representative pendant (meth)acrylate-containing polyether polyols**

| | **Product Description** | **OH# (Theo)** | **OH# (Exp)** | **Visc. (cSt)** | **Mn** | **Mw** | **PDI** | **GMA** Monomer by GC (wt. %)** | **Acrylate (Theo) (eq/kg)** | **Acrylate (IR) (eq/kg)** | **Color (*)** |
|---|---|---|---|---|---|---|---|---|---|---|---|
| Ex. 1 | PPG-425 to 2500 | 45.2 | 45.5 | 1502 | 1787 | 2150 | 1.20 | 0.11 | 3.20 | 3.20 | - |
| | MW with 8 moles | | | | | | | | | | |
| | GMA and 21 moles EO | | | | | | | | | | |
| Ex. 2 | PPG-425 to 2000 | 56.1 | 57.9 | 666 | 1488 | 1559 | 1.05 | 0.85 | 2.0 | 2.1 | 1 |
| | MW with 4 moles | | | | | | | | | | |
| | GMA and ~17 moles PO | | | | | | | | | | |
| Ex. 3 | PPG-425 to 2000 | 56.1 | 57.4 | 880 | 1637 | 1979 | 1.21 | 0.92 | 2.0 | 2.3 | 1 |
| | MW with 4 moles | | | | | | | | | | |
| | GMA and ~23 moles EO | | | | | | | | | | |

| | | | | | | | | | | | |
|---|---|---|---|---|---|---|---|---|---|---|---|
| * Color on the Gardner scale ** Residual propylene oxide was not detected in the sample | | | | | | | | | | | |

Example 4: *Use of example 1 alone or partially in a UV-A curable coating with good chemical resistance.*

Each component described in Table 2 was weighed into a 4 oz glass jar. The materials were hand mixed and protected from light. A draw down onto glass panels was done with a 4 mils wet film thickness. Curing of the panels was done using a Cure-Tek UVA-400 lamp (available from H&S Autoshot) which has a 400-watt metal halide bulb and the lamp assembly was fitted with a clear filter. Irradiation was performed for 4 minutes at 10 inch distance. Pendulum hardness of the cured films and chemical resistance testings are given in Table 2.

Chemical resistance is tested by using a cheesecloth that is mounted on a 2lbs hammer. The cheesecloth is soaked into Methyl ethyl ketone (MEK). The hammer with the cheesecloth is then moved 100 time back and forth (= 1 double rub) over the paint. If the paint is not disintegrated after 100 double rubs the paint gets a reading of ">100".

The pendulum hardness is performed in reference to ISO 1522. A Konig Pendulum Hardness Instrument (Model 299-300, Erichsen GmbH & Co.) is utilized. An average of three runs is reported in seconds.

**Table 2: UV-A curable clearcoat formulations using the EO/GMA copolymer from example #1**

| Formula | #1 | #2 | #3 | #4 |
|---|---|---|---|---|
| Desmolux VP LS 2266¹) | 7.75 g | 15.5 g | | |
| Desmolux VP LS 2258²) | 7.75 g | | | |
| Example #1 | 7.75 g | 7.75 g | 23.25 g | 23.25 g |
| Irgacure 2022³) | 1.75 g | 1.75 g | 1.75 g | 3.00 g |
| Butyl Acetate | 4.41 g | 4.41 g | 4.41 g | 3.16 g |
| | | | | |
| Total | 29.41 g | 29.41 g | 29.41 g | 29.41 g |
| | | | | |
| Test results | | | | |
| Pendulum Hardness (as average of three) | 42.0 | 72.8 | 48.5 | 44.3 |
| MEK Double Rubs | > 100 | > 100 | > 100 | > 100 |

| | | | | |
|---|---|---|---|---|
| 1) an unsaturated aromatic epoxy acrylate available from Bayer MaterialScience LLC, 2) an unsaturated aliphatic urethane acrylate available from Bayer MaterialScience LLC, 3) A photoinitiator blend containing Phenylbis(2,4,6-trimethylbenzoyl)-phosphine oxide available from Ciba Specialty Chemicals. | | | | |

All formulations show excellent chemical resistance of 100 MEK double rubs with good hardness for a UV-A curable paint. The test formulations #3 and #4 prove the high UV-A curing reactivity of the EO/GMA polymer of example #1. The obtained pendulum hardness demonstrates the elasticity of the clearcoat.

## Claims

1. A method of making a hydroxyl or polyhydroxyl functional pendant acrylate- and/or methacrylate-containing polyether, the method comprising:
i) providing a monomer mixture comprising at least one alkylene oxide, at least one oxirane compound containing an acrylate or methacrylate group, and at least one starter compound having at least one Zerewitinoff active hydrogen with an equivalent weight of 31 to 8,000 g/eq of active hydrogen; and
ii) polymerizing the mixture in the presence of a double metal cyanide complex catalyst, and optionally in the presence of an aprotic solvent and/or an antioxidant, wherein the polydispersity index of the resulting monol or polyol is between 1.0 and 1.4.

2. The method of Claim 1, wherein the starter compound has between 1 and 8 active hydrogens/mole.

3. The method of Claim 1, wherein the starter compound is selected from the group consisting of water, aliphatic alcohols, aromatic alcohols, phenols, thiols, acrylate-containing alcohols, aldehydes and ketones containing enolizable hydrogens, malonic esters, carboxylic acids and anhydrides, glycol monoalkyl ethers, polyether polyols derived from an alkylene oxide reacted with lower polyalkanols and having a hydroxyl equivalent weight of between 200 and 8,000 g/eq., polyester polyols and polycarbonate polyols having a hydroxyl equivalent weight of between 200 and 8000 g/eq. and combinations of any of these.

4. The method of Claim 1, wherein the alkylene oxide is selected from the group consisting of ethylene oxide, propylene oxide, 1,2-butylene oxide, 2,3-butylene oxide, styrene oxide, and mixtures thereof.

5. The method of Claim 1, wherein the oxirane compound containing an acrylate or methacrylate group is selected from the group consisting of glycidyl acrylate, glycidyl methacrylate, and combinations thereof.

6. The method of Claim 1, wherein the polymerization is carried out at from 60° to 150°C.

7. The method of Claim 1, wherein the alkylene oxide, oxirane compound containing an acrylate or methacrylate group, and starter compound are each present in the following amounts: 1-98 wt.% alkylene oxide, 2-85 wt.% (meth)acrylate-containing oxirane compound, and 0.2-97 wt.% starter compound, where the amounts of the three compounds together add up to 100 wt.%.

8. The method of Claim 1, wherein the catalyst is a zinc hexacyanocobaltate complex with a polyalkylene glycol.

9. A hydroxyl or polyhydroxy functional pendant acrylate- and/or methacrylate-containing polyether prepared by the process of claim 1, whereas that hydroxyl or ρolyhydroxy functional pendant acrylate-and/or methacrylate- containing polyether having between 1 and 20 pendant acrylate and/or methacrylate groups, a hydroxyl equivalent weight of 200-9,000 g/eq. and having a polydispersity index of 1.0 to 1.4 and whereas that hydroxyl or polyhydroxy functional pendant acrylate- and/or methacrylate-containing polyether comprises alkylenoxides in the monomer mixture in the range of 30 to 60 wt.-% based on the weight of the monomer mixture as a whole, and excluding catalyst.

10. A coating composition comprising one or more hydroxyl or polyhydroxy functional pendant acrylate- and/or methacrylate-containing polyether of Claim 9.

11. The coating composition of Claim 10, further comprising an initiator.

12. The coating composition of Claim 10, further comprising a diluent.

13. A polyurethane dispersion comprising one or more hydroxyl or polyhydroxy functional pendant acrylate- and/or methacrylate-containing polyether of Claim 9.

14. A urethane acrylate comprising one or more hydroxyl or polyhydroxy functional pendant acrylate- and/or methacrylate-containing polyether 9.

15. An NCO-terminated prepolymer comprising one or more hydroxyl or polyhydroxy functional pendant acrylate- and/or methacrylate-containing polyether of Claim 9.

16. An OH-terminated prepolymer comprising one or more hydroxyl or polyhydroxy functional pendant acrylate- and/or methacrylate-containing polyether of Claim 9.

## Patentansprüche

1. Verfahren zur Herstellung eines hydroxy- oder polyhydroxyfunktionellen, seitenständige Acrylat- und/oder Methacrylatgruppen enthaltenden Polyethers, bei dem man:
i) eine Monomerenmischung bereitstellt, die mindestens ein Alkylenoxid, mindestens eine Oxiranverbindung mit einer Acrylat- oder Methacrylatgruppe und mindestens eine Starterverbindung mit mindestens einem Zerewitinoff-aktiven Wasserstoff mit einem Äquivalentgewicht von 31 bis 8000 g/eq aktiver Wasserstoff umfasst; und
ii) die Mischung in Gegenwart eines Doppelmetallcyanidkomplex-Katalysators und gegebenenfalls in Gegenwart eines aprotischen Lösungsmittels und/oder eines Antioxidans polymerisiert, wobei der Polydispersitätsindex des resultierenden Monools oder Polyols zwischen 1,0 und 1,4 liegt.

2. Verfahren nach Anspruch 1, bei dem die Starterverbindung zwischen 1 und 8 aktive Wasserstoffatome/mol aufweist.

3. Verfahren nach Anspruch 1, bei dem man die Starterverbindung aus der Gruppe bestehend aus Wasser, aliphatischen Alkoholen, aromatischen Alkoholen, Phenolen, Thiolen, acrylatgruppenhaltigen Alkoholen, Aldehyden und Ketonen mit enolisierbaren Wasserstoffatomen, Malonsäureestern, Carbonsäuren und Carbonsäureanhydriden, Glykolmonoalkylethern, Polyetherpolyolen, die sich von einem mit Niederpolyalkanolen umgesetzten Alkylenoxid ableiten und ein Hydroxyläquivalentgewicht zwischen 200 und 8000 g/eq aufweisen, Polyesterpolyolen und Polycarbonatpolyolen mit einem Hydroxyläquivalentgewicht zwischen 200 und 8000 g/eq und Kombinationen davon auswählt.

4. Verfahren nach Anspruch 1, bei dem man das Alkylenoxid aus der Gruppe bestehend aus Ethylenoxid, Propylenoxid, 1,2-Butylenoxid, 2,3-Butylenoxid, Styroloxid und Mischungen davon auswählt.

5. Verfahren nach Anspruch 1, bei dem man die Oxiranverbindung mit einer Acrylat- oder Methacrylatgruppe aus der Gruppe bestehend aus Glycidylacrylat, Glycidylmethacrylat und Kombinationen davon auswählt.

6. Verfahren nach Anspruch 1, bei dem man die Polymerisation bei 60 bis 150°C durchführt.

7. Verfahren nach Anspruch 1, bei dem das Alkylenoxid, die Oxiranverbindung mit einer Acrylat- oder Methacrylatgruppe und die Starterverbindung jeweils in den folgenden Mengen vorliegen: 1-98 Gew.-% Alkylenoxid, 2-85 Gew.-% (meth)acrylatgruppenhaltige Oxiranverbindung und 0,2-97 Gew.-% Starterverbindung, wobei sich die Mengen der drei Verbindungen zusammen zu 100 Gew.-summieren.

8. Verfahren nach Anspruch 1, bei dem es sich bei dem Katalysator um einen Zinkhexacyanocobaltatkomplex mit einem Polyalkylenglykol handelt.

9. Hydroxy- oder polyhydroxyfunktioneller, seitenständige Acrylat- und/oder Methacrylatgruppen enthaltender Polyether, hergestellt durch das Verfahren nach Anspruch 1, wobei der hydroxy- oder polyhydroxyfunktionelle, seitenständige Acrylat- und/oder Methacrylatgruppen enthaltende Polyether zwischen 1 und 20 seitenständige Acrylat- und/oder Methacrylatgruppen, ein Hydroxyläquivalentgewicht von 200-9000 g/eq und einen Polydispersitätsindex von 1,0 bis 1,4 aufweist und wobei der hydroxy- oder polyhydroxyfunktionelle, seitenständige Acrylat- und/oder Methacrylatgruppen enthaltende Polyether Alkylenoxide in der Monomerenmischung im Bereich von 30 bis 60 Gew.-%, bezogen auf das Gewicht der Monomerenmischung als Ganzes und ausschließlich von Katalysator, umfasst.

10. Beschichtungszusammensetzung, umfassend einen oder mehrere hydroxy- oder polyhydroxyfunktionelle, seitenständige Acrylat- und/oder Methacrylatgruppen enthaltende Polyether nach Anspruch 9.

11. Beschichtungszusammensetzung nach Anspruch 10, die ferner einen Initiator umfasst.

12. Beschichtungszusammensetzung nach Anspruch 10, die ferner ein Verdünnungsmittel umfasst.

13. Polyurethandispersion, umfassend einen oder mehrere hydroxy- oder polyhydroxyfunktionelle, seitenständige Acrylat- und/oder Methacrylatgruppen enthaltende Polyether nach Anspruch 9.

14. Urethanacrylat, umfassend einen oder mehrere hydroxy- oder polyhydroxyfunktionelle, seitenständige Acrylat- und/oder Methacrylatgruppen enthaltende Polyether nach Anspruch 9.

15. NCO-terminiertes Prepolymer, umfassend einen oder mehrere hydroxy- oder polyhydroxyfunktionelle, seitenständige Acrylat- und/oder Methacrylatgruppen enthaltende Polyether nach Anspruch 9.

16. OH-terminiertes Prepolymer, umfassend einen oder mehrere hydroxy- oder polyhydroxyfunktionelle, seitenständige Acrylat- und/oder Methacrylatgruppen enthaltende Polyether nach Anspruch 9.

## Revendications

1. Procédé de fabrication d'un polyéther contenant un acrylate et/ou un méthacrylate pendant à fonction hydroxyle ou polyhydroxyle, le procédé comprenant les étapes consistant à :
i) se procurer un mélange de monomères comprenant au moins un oxyde d'alkylène, au moins un composé oxirane contenant un groupe acrylate ou méthacrylate, et au moins un composé amorceur comportant au moins un hydrogène actif de Zerewitinoff ayant un poids équivalent de 31 à 8,000 g/éq d'hydrogène actif ; et
ii) polymériser le mélange en présence d'un catalyseur qui est un complexe de cyanure de métal double, et éventuellement en présence d'un solvant aprotique et/ou d'un antioxydant, dans lequel l'indice de polydispersité du monoalcool ou du polyol résultant est compris entre 1,0 et 1,4.

2. Procédé selon la revendication 1, dans lequel le composé amorceur possède entre 1 et 8 atomes d'hydrogène actif/mole.

3. Procédé selon la revendication 1, dans lequel le composé amorceur est choisi dans le groupe constitué par l'eau, les alcools aliphatiques, les alcools aromatiques, les phénols, les thiols, les alcools contenant un acrylate, les aldéhydes et les cétones contenant des atomes d'hydrogène énolisables, les esters maloniques, les acides et anhydrides carboxyliques, les éthers monoalkyliques de glycol, les polyéther-polyols dérivés de la réaction d'un oxyde d'alkylène avec des poly-alcanols inférieurs et possédant un poids équivalent d'hydroxyle compris entre 200 et 8 000 g/éq., les polyester-polyols et les polycarbonate-polyols possédant un poids équivalent d'hydroxyle compris entre 200 et 8000 g/éq. et des combinaisons quelconques de ceux-ci.

4. Procédé selon la revendication 1, dans lequel l'oxyde d'alkylène est choisi dans le groupe constitué par l'oxyde d'éthylène, l'oxyde de propylène, l'oxyde de 1,2-butylène, l'oxyde de 2,3-butylène, l'oxyde de styrène, et des mélanges de ceux-ci.

5. Procédé selon la revendication 1, dans lequel le composé oxirane contenant un groupe acrylate ou méthacrylate est choisi dans le groupe constitué par l'acrylate de glycidyle, le méthacrylate de glycidyle, et des combinaisons de ceux-ci.

6. Procédé selon la revendication 1, dans lequel la polymérisation est réalisée à une température de 60° à 150°C.

7. Procédé selon la revendication 1, dans lequel l'oxyde d'alkylène, le composé oxirane contenant un groupe acrylate ou méthacrylate et le composé amorceur sont chacun présents dans les quantités suivantes : 1-98 % en poids d'oxyde d'alkylène, 2-85 % en poids de composé oxirane contenant un (méth)acrylate et 0,2-97 % en poids de composé amorceur, la somme des quantités des trois composés étant égale à à 100 % en poids.

8. Procédé selon la revendication 1, dans lequel le catalyseur est un complexe d'hexacyanocobaltate de zinc avec un polyalkylène-glycol.

9. Polyéther contenant un acrylate et/ou un méthacrylate pendant à fonction hydroxyle ou polyhydroxyle préparé par le procédé selon la revendication 1, ce polyéther contenant un acrylate et/ou un méthacrylate pendant à fonction hydroxyle ou polyhydroxyle possédant entre 1 et 20 groupes acrylate et/ou méthacrylate pendants, un poids équivalent d'hydroxyle de 200-9 000 g/éq. et possédant un indice de polydispersité de 1,0 à 1,4 et dans lequel ce polyéther contenant un acrylate et/ou un méthacrylate pendant à fonction hydroxyle ou polyhydroxyle comprend des oxydes d'alkylène dans le mélange de monomères à raison de 30 à 60 % en poids par rapport au poids du mélange de monomères dans son ensemble, et à exclusion du catalyseur.

10. Composition de revêtement comprenant un ou plusieurs polyéthers contenant un acrylate et/ou un méthacrylate pendant à fonction hydroxyle ou polyhydroxyle selon la revendication 9.

11. Composition de revêtement selon la revendication 10, comprenant en outre un initiateur.

12. Composition de revêtement selon la revendication 10, comprenant en outre un diluant.

13. Dispersion de polyuréthane comprenant un ou plusieurs polyéthers contenant un acrylate et/ou un méthacrylate pendant à fonction hydroxyle ou polyhydroxyle selon la revendication 9.

14. Acrylate d'uréthane comprenant un ou plusieurs polyéthers contenant un acrylate et/ou un méthacrylate pendant à fonction hydroxyle ou polyhydroxyle selon la revendication 9.

15. Prépolymère à terminaison NCO comprenant un ou plusieurs polyéthers contenant un acrylate et/ou un méthacrylate pendant à fonction hydroxyle ou polyhydroxyle selon la revendication 9.

16. Prépolymère à terminaison OH comprenant un ou plusieurs polyéthers contenant un acrylate et/ou un méthacrylate pendant à fonction hydroxyle ou polyhydroxyle selon la revendication 9.
